# EUROPEAN PATENT APPLICATION

(11) **EP 1 703 215 A1**
(43) Date of publication of application: **20.09.2006**
(21) Application number: 05003710.0
(22) Date of filing: 22.02.2005
(51) Int. Cl.: F24D 3/16, E04B 9/00

(54) **Radiating aluminium panel for false ceilings**

(71) Applicant: Riello, Franco, 20149 Milano (IT); Riello, Andrea, 20149 Milano (IT); Donati, Giuseppe, 24060 Cenate Sopra (Bergamo) (IT); Donati, Francesco, 24060 Cenate Sopra (Bergamo) (IT)
(72) Inventor: Riello, Franco, 20149 Milano (IT); Riello, Andrea, 20149 Milano (IT); Donati, Giuseppe, 24060 Cenate Sopra (Bergamo) (IT); Donati, Francesco, 24060 Cenate Sopra (Bergamo) (IT)
(74) Representative: Cicogna, Franco

(57) **Abstract**

The present invention relates to a radiating aluminium panel particularly for false ceilings and the like, comprising, as a main feature thereof, from the intrados to the extrados, a bottom layer made of an aluminium sheet, at least a thermal exchange battery therethrough a thermal exchange fluid passes, an aluminium fretted layer and an aluminium sheet top layer.

## Description

### BACKGROUND OF THE INVENTION

The present invention relates to a radiating aluminium panel, which has been specifically designed for false ceilings and the like.

Climatizing systems providing for the use of radiating panels arranged on the ceiling, are already known.

The above mentioned prior systems, however, are of difficult installation and assembling, and, moreover, they have thermal exchange properties which could not be considered as optimum, with consequent high losses and costs.

### SUMMARY OF THE INVENTION

Accordingly, the aim of the present invention is to solve the above mentioned problems, by providing a radiating aluminium panel, particularly for false ceilings and the like, allowing to improve the thermal exchange characteristics, and, in particular, allowing to provide a very close contact between the power carrier and the environment to be served, to provide an optimum performance both with respect to cooling and heating.

Within the scope of the above mentioned aim, a main object of the present invention is to provide such a radiating panel allowing to achieve a very high power saving, owing to the use of fluids having a small thermal exchange gradient with respect to the environment air.

Yet another object of the present invention is to provide such a radiating aluminium panel, particularly for false ceilings and the like, which, owing to its specifically designed constructional features, is very reliable and safe in operation.

Yet another object of the present invention is to provide such a radiating aluminium panel which can be easily made and which, moreover, is very competitive from a mere economic standpoint.

According to one aspect of the present invention, the above mentioned aim and objects, as well as yet other objects, which will become more apparent hereinafter, are achieved by a radiating aluminium panel, particularly for false ceilings and the like, characterized in that said panel comprises, from the intrados to the extrados thereof, a bottom aluminium sheet layer, at least a thermal exchange battery therethrough a thermal exchange fluid passes, an aluminium fretted layer and an aluminium sheet top layer.

### BRIEF DESCRIPTION OF THE DRAWINGS

Further characteristics and advantages of the present invention will become more apparent hereinafter from the following detailed disclosure of a preferred, though not exclusive, embodiment of a radiating aluminium panel, particularly for false ceilings and the like, which is illustrated, by way of an indicative, but not limitative, example in the accompanying drawings, where:
Figure 1 schematically illustrates a radiating aluminium panel according to the present invention, and clearly showing its component layers;
Figure 2 schematically shows a modified embodiment of the radiating aluminium panel according to the invention;

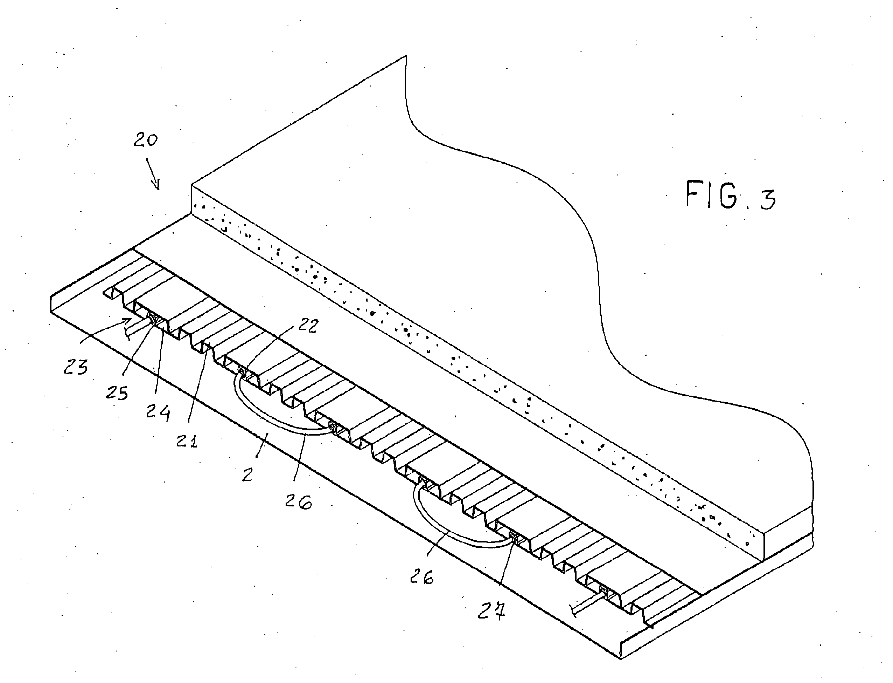

Figure 3 schematically shows the radiating aluminium panel shown in figure 2;

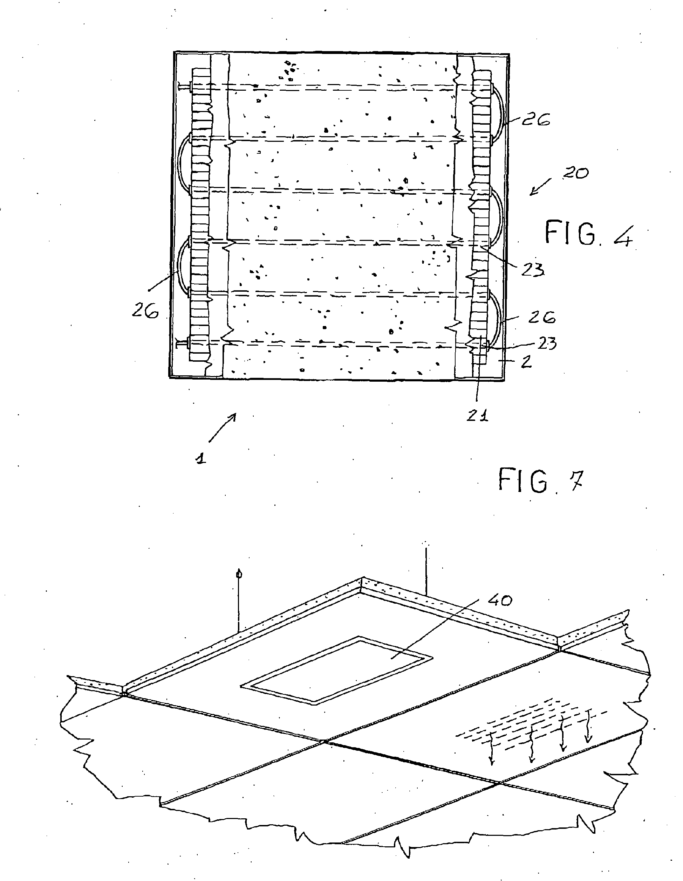

Figure 4 is a top plan view of the radiating aluminium panel shown in figure 2;

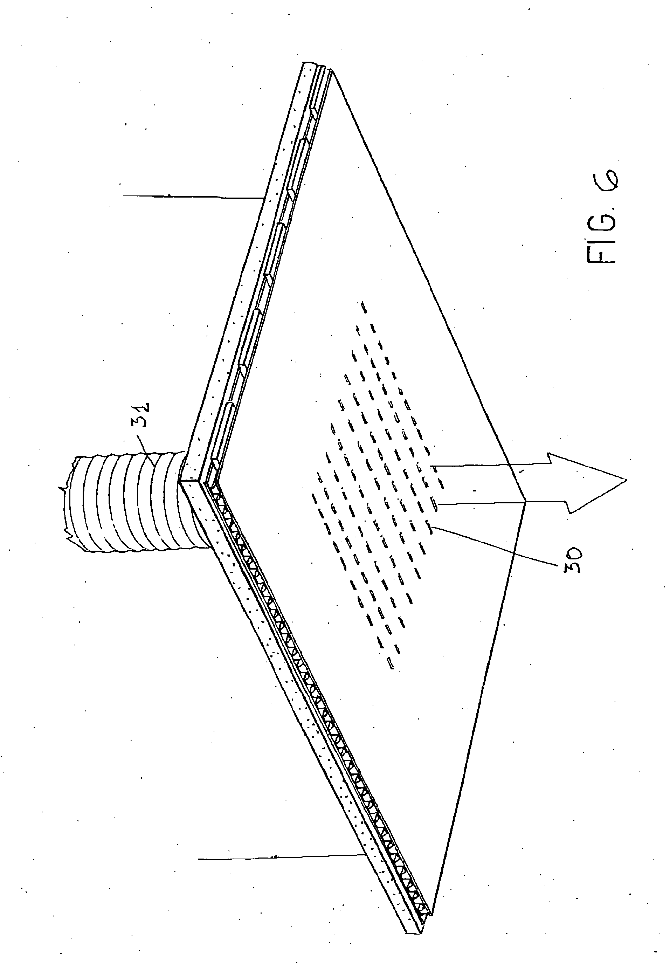

Figure 5 shows a coupling joint for coupling the water circulating pipe fitting manifold;
Figure 6 shows a ventilating panel; and
Figure 7 schematically shows panels having different functional or operating properties.

### DESCRIPTION OF THE PREFERRED EMBODIMENTS

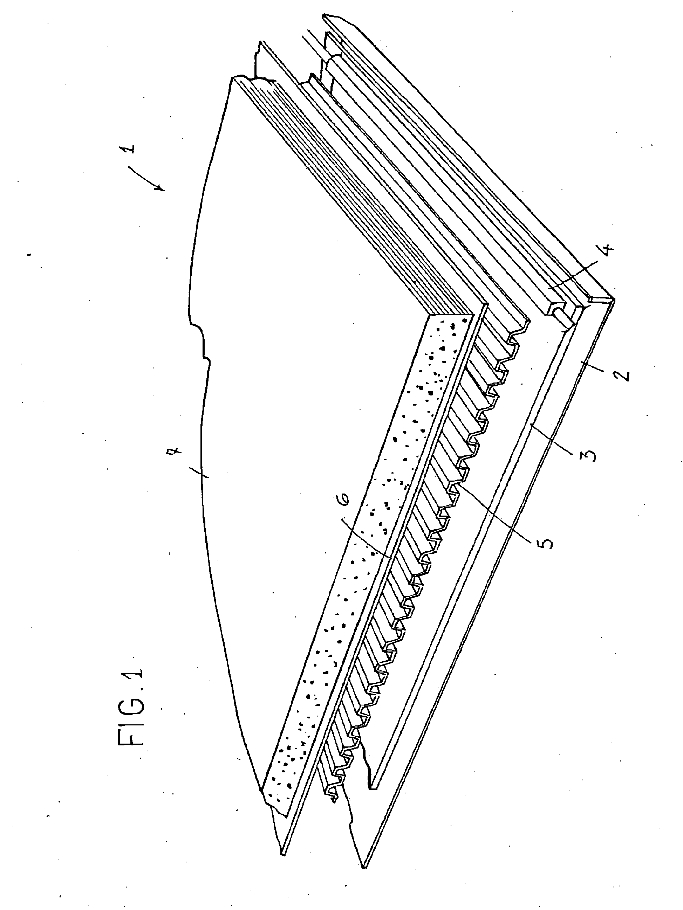

With reference to the number references of the above mentioned figures, and, more specifically, figure 1, the radiating aluminium panel, specifically designed for false ceilings and the like, which has been generally indicated by the reference number 1, comprises, from the intrados to the extrados thereof, an aluminium sheet bottom layer 2 which is advantageously made of an anodized aluminium material with a thickness of 10/10 mm.

Above the bottom layer 2, a thermal exchange battery is arranged, said thermal exchange battery comprising aluminium section members 3, which have advantageously a thickness of 4.6 mm and a width of 50 mm, with a spacing between a battery and another of about 20 mm.

More specifically, said batteries are coupled by fitting manifolds, generally indicated by the reference number 4, i.e. head and bottom manifolds, allowing a carrier fluid to pass therethrough, said carrier fluid generally comprising water, and being provided for passing through the overall series of batteries, before flowing from the panel.

Above said batteries 3 is provided a fretted layer 5, comprising raw aluminium with a thickness of about 3/10 mm.

Above said fretted layer 5, a top layer, comprising an anodized aluminium sheet 6 is moreover provided, and having preferably a thickness of 10/10.

A further thermally insulating layer 7 covers the above disclosed layer assembly.

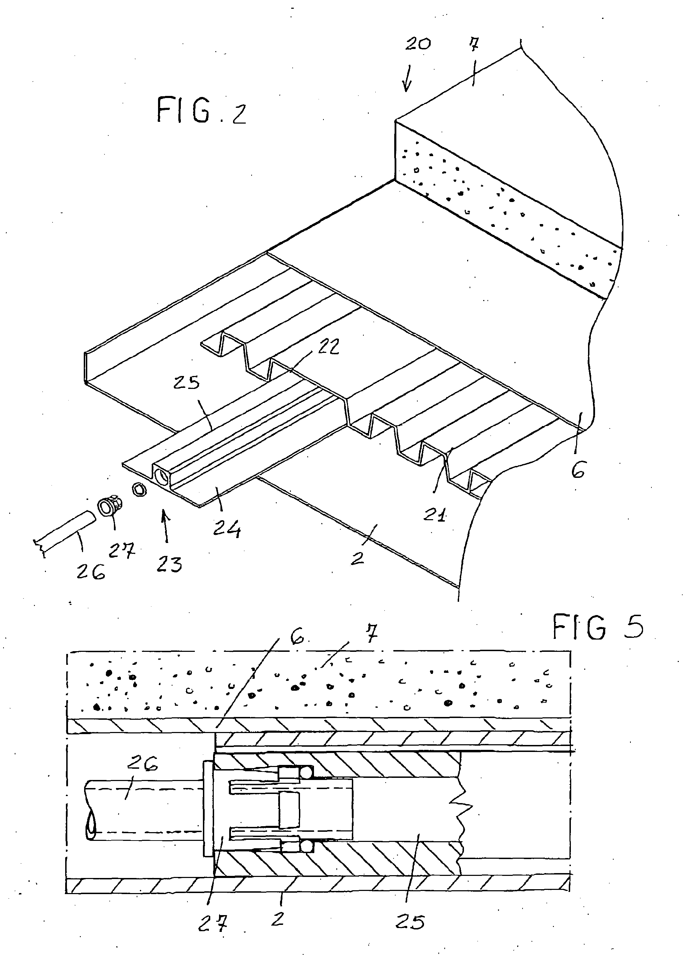

As shown in figure 2, it is possible to provide a modified embodiment of the inventive panel, which is conceptually analogous to the panel which has been already disclosed, and being indicated by the reference number 20.

More specifically, said panel 20 comprises a sheet bottom layer 2, thereon is arranged a middle fretted layer 21 which, at preset pitches, defines a plurality of seats or recesses 22 in which a finned heat exchanger tube can be arranged, said tube being generally indicated by the reference number 23.

It comprises a flat leg or wing 24, on which is directly formed a square duct 25.

More specifically, said ducts 25 are so coupled to one another to provide a tube coil arrangement, by using 90° bent fitting portions 26, which are engaged through a plug-in arrangement 27.

Above the middle fretted layer 21 an aluminium sheet top layer 6 is arranged, which, at the top thereof, adjoins with a thermal insulating layer 7.

In this connection it should be pointed out that the subject radiating panel can be also used for ventilating purposes, as is schematically shown in figure 6.

In such a case, openings 30 are formed through the bottom layer, thereby allowing air to be distributed to the environment, said air being supplied by an inlet duct 31.

The above disclosed panel can also be made with a lot of different characteristics.

Thus, for example, it would be possible to provide a sound absorption panel, including a bottom aluminium sheet layer, overlapped by a rock wool middle layer, enclosed by an aluminium top further layer.

Moreover, a plurality of throughgoing holes, having a diameter of substantially 1,5 mm, affecting substantially 20% of the surface and designed for providing an acoustic absorption coefficient α not less than 0.6, can also be provided.

The panel shown in the figures can be differently equipped and can also provide a lighting source, which has been indicated by the reference number 40 in figure 7.

The thus made panels can be further subjected to any desired bending operation, thereby providing a panel arrangement allowing to easily form false ceilings, as shaped as desired.

With the above disclosed arrangement, a very close contact is obtained between the thermal carrier fluid and the convective radiating surface, being optimized owing to the fact that the subject assembly is fully made of an aluminium material, and, accordingly, has very high thermal exchange coefficients.

Another important aspect of the invention is that the inventive panel can be made with any desired surface finishings.

For example, it would be possible to provide panels having, in addition to high technical and functional features, a very good aesthetic characteristic.

From the above disclosure, it should be apparent that the invention fully achieves the intended aim and objects.

In particular, the fact is to be pointed out that the invention has provided a radiating panel which can be easily assembled with other like panels, to provide an optimum distribution of the circulating heat exchanging fluid, and which has a very small thermal gradient, with respect to the environment, thereby providing an optimum thermal exchange with the environment air.

The invention, as disclosed, is susceptible to several modifications and variations, all of which will come within the scope of the invention.

Moreover, all the constructional details can be replaced by other technically equivalent elements.

In practicing the invention, the used materials, and the contingent size and shapes, can be any, depending on requirements.

## Claims

1. A radiating aluminium panel, particularly for false ceilings and the like, **characterized in that** said panel comprises, from the intrados to the extrados thereof, an aluminium sheet bottom layer, at least a thermal exchange battery therethrough a thermal exchange fluid passes, an aluminium fretted layer and an aluminium sheet top layer.

2. A radiating aluminium panel, particularly for false ceilings and the like, **characterized in that** said panel comprises an aluminium sheet bottom layer, a middle fretted layer housing with a set pitch a finned heat exchanger tube and an aluminium sheet top layer.

3. A radiating panel, according to the preceding claims, **characterized in that** said thermal exchange batteries are alternatively coupled to a head manifold and a bottom manifold, to provide a carrier fluid flow passing through the overall series of said batteries.

4. A radiating panel, according to one or more of the preceding claims, **characterized in that** said finned head exchanger pipe or tube comprises a flat wing housed in a recess defined by a middle fretted layer, and that said heat exchanger pipe is coupled, through 90° bent pipe and plug-in elements, to an adjoining finned heat exchanger pipe.

5. A radiating panel, according to one or more of the preceding claims, **characterized in that** said panel comprises, at a top thereof, a thermally insulating layer.

6. A radiating panel, according to one or more of the preceding claims, **characterized in that** said panel comprises coupling section members for connecting each said panel to a ceiling.

7. A radiating panel, according to one or more of the preceding claims, **characterized in that** said panel comprises fitting means.

8. A radiating panel, according to one or more of the preceding claims, **characterized in that** said panel comprises a plurality of openings for allowing ventilating air to pass therethrough, said ventilating layer being supplied by an air inlet duct.

9. A radiating panel, according to one or more of the preceding claims, **characterized in that** said fitting means comprise lighting means.

10. An aluminium sound absorption panel, particularly for false ceilings and the like,
**characterized in that** said panel comprises, from an intrados to an extrados thereof, an aluminium sheet bottom layer, a rock wool middle layer, an aluminium top layer and a plurality of throughgoing holes substantially affecting 20% of the panel surface.
